(19) Europäisches Patentamt
European Patent Office
Office européen des brevets

(11) Publication number: 0 175 474
A2

(12) EUROPEAN PATENT APPLICATION

(21) Application number: 85305740.4

(22) Date of filing: 13.08.85

(51) Int. Cl.⁴: C 08 G 18/67, C 08 G 18/28, C 09 J 3/16, C 09 J 5/00

(30) Priority: 13.08.84 GB 8420530

(43) Date of publication of application: 26.03.86 Bulletin 86/13

(84) Designated Contracting States: AT BE CH DE FR GB IT LI LU NL SE

(71) Applicant: MACPHERSON INDUSTRIAL FINISHES LIMITED, Warth Mills Radcliffe Road Bury, Lancashire, BL9 9NB (GB)

(72) Inventor: Moss, Robert Malcolm, 6 Reddish Avenue Whaley Bridge, Stockport Cheshire, SK1 7DP (GB)
Inventor: Darbyshire, Arnold Harold, 7 Walsingham Avenue West Didsbury, Manchester 20 (GB)

(74) Representative: Allard, Susan Joyce et al, BOULT, WADE & TENNANT 27 Furnival street, London EC4A 1PQ (GB)

(54) **Polyurethane adhesive compositions.**

(57) A solvent-free and water-free adhesive composition which comprises a polyurethane composition containing at least 1% by weight of terminal isocyanate groups and/or terminal epoxide groups which is the co-reaction of:

(i) a polyhydroxy compound having a molecular weight in the range of from 100 to 6500;
(ii) a polyisocyanate or a mixture of a polyisocyanate and an epoxide group containing compound; and
(iii) a hydroxy acrylate, a hydroxy methacrylate, a hydroxy allylic compound or a hydroxy vinyl compound;

the composition upon exposure to ultra violet irradiation having a tack strength of at least $2N/cm^2$.

EP 0 175 474 A2

# POLYURETHANE ADHESIVE COMPOSITIONS

The present invention relates to polyurethane adhesive compositions and, in particular, to solvent-free and water-free polyurethane adhesive compositions which are useful as High Tack Adhesives i.e. adhesives which allow the substrates to which they are applied to be self-supporting whilst the adhesive bond is formed.

Traditionally, adhesives can be classified as follows:-

(a) solvent or water based polymer solutions which upon evaporation of the solvent or water produce a substance which will adhere two substrates together by

(i) further reaction to produce the adhesive bond whilst the substrates are held together,

(ii) the cohesive strength of the adhesive towards the substrates which holds them together whilst further polymerization takes place to achieve the final bonded substrates, or

(iii) a build up of the adhesive bond by crystallization of the adhesive whilst the substrates are held together.

(b) a hot melt polymer which upon melting will co-hesively adhere to a substrate upon application and upon contacting the second substrate will achieve a thermoplastic bond between the two substrates upon cooling.

(c) a one or two component composition which is applied to a substrate and then brought into

contact with a second substrate and the said substrates held together whilst reaction occurs to make the final adhesive bond.

In general therefore, adhesive compositions normally require that the bonded components be held together by an external force until a sufficient bond is produced to hold the substrates together. Hitherto, any compositions which allow the substrates to be self-supporting whilst the bond is formed, i.e., contact adhesives or high tack adhesives, have been solvent or water based polymer solutions, or have involved the use of heating in their application, this latter technique requiring a finite time for the high tack surface to be produced.

We have now developed a novel adhesive composition which is both solvent and water free, which has a low viscosity at room temperature, which is rapidly activated by daylight or an ultra-violet light source to yield a high tack surface which will then adhere the two substrate surfaces together without external support and which can be cured at room temperature to create a thermoset bond which is resistant to heat, chemicals and oxygen.

Accordingly, the present invention provides a solvent-free and water-free adhesive composition which comprises a polyurethane composition containing at least 1% by weight of terminal isocyanate groups and/or terminal epoxide groups which is the co-reaction product of:-

(i) a polyhydroxy compound having a molecular weight in the range of from 100 to 6500;

(ii) a polyisocyanate or a mixture of a polyisocyanate and an epoxide group containing compound; and

(iii) a hydroxy acrylate, a hydroxy methacrylate, a hydroxy allylic compound or a hydroxy vinyl compound;

the composition upon exposure to ultravoilet irradiation having a tack strength of a least $2N/Cm^2$.

The "tack strength" is a measure of the force which is necessary to separate two substrates which are joined by the adhesive composition in its activated state. The adhesive may be applied to one or both surfaces. The compositions after exposure to ultra violet irradiation having a tack strength of at least $2N/CM^2$, preferably at least $3N/CM^2$ and more preferably at least $4N/CM^2$.

Component (i), the polyhydroxy compound, may be a polyester, polyamide, polyester or polybutadiene polyol containing from 2 to 6 hydroxyl groups per molecule and having a molecular weight in the range of from 100 to 6500. The polyols for use in the invention may also contain unsaturation in order to aid the achievement of high tack on application to a substrate surface. The concentration of the polyhydroxy compound will generally be in the range of from 5 to 85% by weight of the reaction mixture.

Component (ii) may comprise only a polyisocyanate which is an aliphatic or aromatic isocyanate containing from 2 to 4 isocyanate groups per molecule. Examples of the polyisocyanate are toluene diisocyanate, isophorone diisocyanate and 4,4-diphenylmethane diisocyanate. The polyisocyanate is preferably included in the reaction mixture in an amount of from 10 to 50% by weight and in an amount

such that the adhesive composition contains at least 1% by weight, preferably at least 1.5% by weight of free isocyanate groups.

Component (ii) may also include an epoxide group containing compound containing from 1 to 4 epoxide rings per molecule, in admixture with the isocyanate. The compound must also be capable of reacting into the polymer leaving pendant epoxy groups. An example of such an epoxide has the following structure

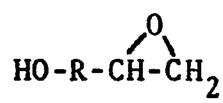

where R is $CH_2$, $C_2H_4$, $C_nH_{2n}$ where n is 3 to 10. The epoxide group containing compound, if present, is preferably included in the reaction mixture in an amount of from 1-20% by weight.

Component (iii) may be hydroxyethyl acrylate, hydroxypropyl acrylate, hydroxybutyl acrylate, hydroxyethyl methacrylate, hydroxypropyl methacrylate, hydroxybutyl methacrylate, 4-hydroxycyclohexyl acrylate, 4-hydroxycyclohexyl methacrylate, 5-hydroxycyclooctyl acrylate or 5-hydroxycyclooctyl methacrylate. Other hydroxy derivatives of acrylic or methacylic acid esters and hydroxy allylic compounds or hydroxy vinyl compounds may also be used. Component (iii) is generally used in an amount of from 5 to 40% by weight.

The reaction mixture used in the preparation of the polyurethane composition contained in the

adhesive compositions of the present invention may also include an unsaturated co-reactant. The unsaturated co-reactant may be, for example, an alkyc acrylate, an alkyl methacrylate, a polyfunctional acrylate or polyfunctional methacrylate resin. The co-reactant will generally be included in the reaction mixture in an amount of from 0 to 80% by weight.

To facilitate cure of the high tack adhesive, the mixture may also contain a compound which is rendered isocyanate reactive upon application of the adhesive to one of the substrates and activation by atmospheric moisture. Examples of such compounds include oxazolidines, ketimines and enamines. These latent isocyanate reactants may be included to cure the adhesive more rapidly than relying on the basic isocyanate/water reaction.

The reaction mixture may also include therein one or more catalysts of the following type:-

(a) a photoinitiator to initiate the free radical polymerisation of the unsaturated groups when exposed to ultra-violet radiation. Such a photo-initiator may be present in an amount of from 0 to 10% by weight.

(b) a photoinitiator which generates cations which initiate the polymerization of any free epoxide groups contained in the composition

(c) a moisture curing catalyst to accelerate the reaction of the isocyanate groups with atmospheric moisture or the latent isocyanate reactant, and

(d) a photoactivator which may be used in combination with a photoinitiator (as discussed above) to produce a synergistic effect with regard to the polymerisation rate.

Other additives may be used in order to improve the performance of the adhesive. Such additives may be antioxidants, pigments and rheology modifiers, such as wetting, thixotropic and flatting agents.

The adhesive compositions of the present invention contain unsaturated groups which polymerise when activated by radiation such as ultra violet radiation, if desired catalysed by a photoinitiator. When the adhesive compositions of the present invention are applied to a substrate surface and thereafter exposed to radiation, a high tack is developed and the first substrate surface may then be contacted with a second substrate surface to produce a fixed laminate.

Cure may also be assisted by the cationic polymerization of free epoxide groups if these are present in the composition, this polymerization proceeding both during and after the free radical polymerization of any free isocyanate groups present in the composition.

Ultimate cure of the adhesive composition is obtained by the reaction of atmospheric moisture or any latent isocyanate reactant, if included, with the terminal isocyanate groups in the polyurethane compositons to produce urea groups.

The present invention will be further described with reference to the following examples in which parts and percentages are by weight unless otherwise stated.

<u>TACK STRENGTH</u>

In these Examples, the tack strength was measured using a Blocking Tester (Rohm & Haas) which conformed to DIN/ISO 4622 and ASTM 2793.

The method involved the separation of two plane adhering layers by a force, which acts in a vertical direction related to the tangent plane. The result from such a test is termed - the tack strength, or blocking resistance.

The adhesive was applied to a glass rectangular slide (76 x 25mm). It was exposed to a UV source. Immediately it was contacted with a similar slide placed at right angles to the first in a jig which provided accurate alignment. A load was applied for 30 seconds. The crossed composite was placed in the machine and the separating force applied at a constant rate. Upon yield, the increase in force ceased and was used as a measure of force per area of adhesion. All tests were carried out at 23 $\pm$ $2^{o}C$.

## U.V. CURING

The formulations of the Examples were cured using a proprietary U.V. curing source - Primarc Mini-cure. This laboratory equipment is very representative of industrial scale U.V. curing sources.. The lamp emitted U.V. radiation at an energy of 200 watts per inch and the wavelength of emission of a mercury lamp. Exposure times of 1/2 - 1 second were used in each case to achieve the desired degree of polymerisation.

## EXAMPLE 1

| | Parts by Weight |
|---|---|
| *Polyoxypropylene/oxyethylene polyol | 74.4 |
| **Pure 4.4' - MDI | 22.5 |
| 2-hydroxyethyl acrylate | 1.1 |
| p-methoxy phenol | 0.01 |
| dibutyl tin dilaurate | 0.005 |
| tripropylene glycol diacrylate | 5.00 |
| ***Irgacure 651 | 1.96 |
| MEHQ (Methyl ethyl hydroquinone) | 0.025 |

*2000 molecular weight

**4.4' MDI - 4,4' diphenylmethane diisocyanate

***Irgacure 651 - Ciba Geigy Ltd - photo initiator.

**Method of Preparation**

The polyether polyol (74.4g) was charged to a reaction vessel. The polyol was dehydrated for 1 hour under vacuum at 110°C. After cooling to 80°C, pure MDI (18.9g) was added and mixed in rapidly. The contents were degassed under vacuum for five minutes, after which dry air was bubbled through for the remainder of the preparation. The reaction mixture was held for 2 hours at 80°C, after which dibutyl tin dilaurate was added. After a further 30 minutes, MEHQ is added, followed by 2-hydroxy ethyl acrylate which was dripped in (1.1g) whilst the prepolymer was stirred continuously. The hydroxy monomer was allowed to react for 30 minutes after completing its addition to the vessel.

The remainder of the MDI (3.9g) was now added to the mixture with stirring. The contents were cooled to approximately 70°C, and the tripropylene glycol diacrylate was added. This was followed by the addition of the Irgacure 651. The resultant composition was in the viscosity range 50-80 poise at 25°C. The blend was stored in sealed opaque containers.

The percentage of free isocyanate groups in the composition was 3.75% by weight.

The composition when irradiated under a U.V. source resulted in a tacky adhesive. The tack strength of the adhesive, as measured by the Rohm & Haas Blocking Tester, was $4N/cm^2$.

## EXAMPLE II

| | Parts by Weight |
|---|---|
| *Polydiethylene glycol adipate | - 100 |
| **TDI | - 15 |
| ***Trimethylol propane diallyl ether | - 4 |
| MEHQ | - 0.015 |
| Irgacure 651 | - 1.5 |
| N.N' - dimethyl benzylamine | - 0.2 |

* - Diorez 560 - B + T Polymers - 2800 mol wt

** - Isonate T80 - Upjohn Polymers

*** - Perstorp AB

### Method of Preparation

Polydiethylene glycol adipate (100g) was charged to a reaction vessel and dehydrated for 1 hour under vacuum at 120°C. It was cooled to 60°C and Isonate T80 (15g) was added via a dropping funnel to the stirred polyol. The temperature was raised to 80 - 90°C and held for 2 hours. The temperature was then reduced to 60°C, and trimethylol propane diallyl ether (4g) was added and stirred in. A rapid reaction ensued which was controlled at 80°C maximum. The MEHQ (0..015g) was added and the mixture cooled to 50°C. The Irgacure 651 (1.5g) and N,N'-dimethyl benzylamine (0.2g) were added. The

composition was analysed for the percentage of residual free NCO groups, packed and sealed in an opaque container.

The percentage of free isocyanate groups in the composition was 2.8% by weight.

The product was irradiated under a U.V. source to produce a tacky adhesive. The tack strength of the adhesive, as measured by the Rohm & Haas Blocking Tester, was 4.5N/$cm^2$.

This sample was allowed to moisture cure for 7 days under ambient condition to produce a film having the following physical properties:-

| | | |
|---|---|---|
| Hardness | - | 70 shore A |
| Tensile Strength | - | 18 MN/$m^2$ |
| Elongation at break | - | 250% |
| Tear Strength | - | 25N/mm |

## EXAMPLE III

| | | Parts by Weight |
|---|---|---|
| * | Terathane 1000 | - 100 |
| ** | IPDI | - 32 |
| *** | 2-hydroxyethyl methacrylate | - 4 |
| | MEHQ | - 0.014 |
| | Irgacure 651 | - 2 |
| | Diphenylamine | - 1 |
| **** | Fomrez UL22 | - 0.02 |

* - Dupont - polytetrahydrofuran 1000 mol wt
** - Isophorone Diisocyanate - Huls AG
*** - 2 - hydroxy ethyl methacrylate - Honeywill & Stein
**** - Tin IV salt - Witco Chem

### Method of Preparation

Terathane 1000 (100g) was melted and charged to a reaction vessel. It was dehydrated at 110-120°C for 1 hour under vacuum. The polyol was cooled to 70°C and IPDI (32g) added. The reaction was held at 80 - 90°C for 2 hours. Fomrez UL22 (0.02g) was added to complete the polymerisation. The contents were cooled to 60°C. MEHQ (0.014g) and Z-hydroxy ethyl methacrylate (4g) were added and the ensuing reaction was maintained at 80°C maximum for 1 hour.

The mixture was cooled to 50°C. Irgacure 651 (2g) was added and stirred in, followed by diphenylamine (1g).

The composition was analysed for percentage of free NCO groups and packed into opaque containers.

The percentage of free isocyanate groups was 1.6% by weight.

The product was irradiated under a U.V. source to produce a tacky adhesive. The rack strength of the adhesive, as measured on the Rohm & Haas Blocking Tester, was 5N/$cm^2$.

## EXAMPLE IV

| | | Parts by weight |
|---|---|---|
| * Polyether triol G3000 | - | 100 |
| 2-hydroxyethyl acrylate | - | 4.06 |
| Isophorone diisocyanate | - | 7.77 |
| Pure 4,4' - MDI | - | 49.00 |
| MEHQ | - | 0.03 |
| Paranitrobenzoyl chloride | - | 0.01 |
| Dibutyltin dilaurate (DBTL) | - | 0.01 |
| Dipropylene glycol diacrylate | - | 5 |
| Irgacure 651 | - | 1.00 |

* Propylan G3000 - Lankro Chemicals

## Method of Preparation

The polyether triol (100g) was charged to a reaction vessel. The polyol was dehydrated for 1 hour under vacuum at 110°C. After cooling to 80°C, paranitrobenzoyl chloride (0.01g), MEHQ (0.03g) and DBTL (0.01g) was added and stirred for ten minutes. Isophorone diisocyanate (7.77g) was added and stirred in, followed by 2-hydroxyethyl acrylate (4.06g). The reaction that followed was maintained at 80°C until no isocyanate was present (disappearance of NCO stretch at 2240cm$^{-1}$ by Infra Red Spectroscopy).

Pure 4,4'-MDI (49g) was added and maintained at 80°C for a further 1 hour. The mixture was cooled to 60°C. Dipropylene glycol diacrylate (5g) was added and stirred in. Iragacure (651) was added. The resultant composition was stored in sealed opaque containers.

The percentage of free isocyanate groups in the composition was 6.5% by weight.

The composition was coated on to a substrate surface using a bar coater and irradiated by a U.V. source. The tack strength of the adhesive composition, as measured by the Rohm & Haas Blocking Tester, was 5N/cm$^2$.

This sample, cured for 7 days gave an elastomeric film having the following properties:-

| | | |
|---|---|---|
| Hardness | - | 66 shore A |
| Tensile Strength | - | 12 MN/m$^2$ |
| Elongation at break | - | 270% |
| Tear Strength | - | 14Nmm |

## EXAMPLE 5

| | | Parts by weight |
|---|---|---|
| Polyether triol G3000 | - | 100 |
| TDI | - | 18.5 |
| 2-hydroxyethyl acrylate | - | 3.5 |
| * glycidol | - | 2.1 |
| ** DY026 | - | 8.5 |
| Irgacure 651 | - | 0.8 |
| *** CG24-61 | - | 0.8 |
| MEHQ | - | 0.02 |
| dibutyltin dilaurate (DBTL) | - | 0.01 |
| paranitrobenzoyl chloride | - | 0.01 |

* - Degussa
** - diglycidylether of 1,4 butane diol
*** - cationic photoinitiator

### Method of Preparation

The polyether triol (100g) was charged to a reaction vessel and dehydrated at 110°C for 1 hour under vacuum. After cooling to 80°C, paranitrobenzoyl chloride (0.01g) was added and stirred in until dissolved. TDI (18.5g) was added and reacted with the polyol for 2 hours at 80°C to produce a low/medium viscosity prepolymer. Dibutyl tin dilaurate (0.01g) and MEHQ (0.02g) were added and stirred in, followed by 2 hydroxyethyl acrylate (3.5g). The acrylourethane

was produced within 30 minutes (disappearance of hydroxyl stretch $3450cm^{--1}$ by Infra red Spectroscopy).

Glycidol (2.1g) was added and reacted in at 70-75°C for a further 30 minutes. Similar hydroxyl group monitoring was carried out for full glycidol reaction. The product was cooled to 60°C and the diluent DY026(8.5g) was added and stirred in. This blend was further cooled to 40-45°C. Irgacure 651 (0.8g) was added and stirred in, followed by CG24-61 (0.8g). The product was stored in a sealed opaque container.

The percentage of free isocyanate groups was 1.35% by weight, the percentage of free epoxide groups was 3.95% by weight.

The composition was exposed to a U.V. curing source to yield a tacky adhesive. The tack strength of the adhesive, as measured by Rohm & Haas Blocking Tester, was at least $3N/cm^2$.

Solvent based high tack or contact adhesives possess the property of high tack upon evaporation of most of the solvent. Values measured for such adhesives on the Rohm & Haas Blocking Tester were as follows:-

| | Tack Strength (N/cm2) |
|---|---|
| MORAD XE903 (Morton Williams USA) | 4.5N/$cm^2$ |
| DURELAST 4055 (B & T Polymers UK) | 6.1N/$cm^2$ |
| DURELAST 4064 (B & T Polymers UK) | 4.0N/$cm^2$ |

All of the above adhesives were coated on to a substrate surface using a bar coater and allowed to dry for 2 minutes at room temperature. They were coated at 60% solids in methylene chloride.

A tack strength value of greater than 2-3N/$cm^2$, as measured on the Rohm & Haas Blocking Tester, is regarded as satisfactory in sticking together most common substrates EG. paper, wood, fabrics, plastics, natural and synthetic polymers, foams, ceramics, metals, glass, minerals and concrete.

In use of the adhesive compositions of the present invention, the one component material is applied to one substrate surface by spraying, dipping or coating. The wet coating of adhesive is exposed to an electron beam, daylight or an ultra-violet lamp. The coating changes to a high tack polymerisate which bonds and coheres very readily to a second substrate surface to produce an instant high green strength bonded laminate. At this stage, the bond is still partially fluid and subsequent reaction with atmospheric moisture and/or any latent isocyanate reactant present and/or a cationically initiated epoxide reaction is necessary to produce a crosslinked polymer which is completely cured.

CLAIMS

1. A solvent-free and water-free adhesive composition which comprises a polyurethane composition containing at least 1% by weight of terminal isocyanate groups and/or terminal epoxide groups which is the co-reaction of:-

(i) a polyhydroxy compound having a molecular weight in the range of from 100 to 6500;

(ii) a polyisocyanate or a mixture of a polyisocyanate and an epoxide group containing compound; and

(iii) a hydroxy acrylate, a hydroxy methacrylate, a hydroxy allylic compound or a hydroxy vinyl compound;

the composition upon exposure to ultra violet irradiation having a tack strength of at least $2N/cm^2$.

2. A composition as claimed in claim 1 wherein the polyhydroxy compound is a polyester, polyamide, polyether or polybutadiene polyol containing from 2 to 6 hydroxyl groups per molecule.

3. A compositon as claimed in claim 1 or claim 2 wherein the polyhydroxy compound is present in the reaction mixture in an amount of from 5 to 80% by weight.

4. A composition as claimed in any one of the preceding claims wherein the polyisocyanate is an aliphatic or aromatic isocyanate containing from 2 to 4 isocyanate groups per molecule.

5. A compositon as claimed in any one of the preceding claims wherein the polyisocyanate is present in the reaction mixture in an amount of from 10 to 50% by weight.

6. A composition as claimed in any one of the preceding claims which contains at least 1.5% by weight of terminal isocyanate groups.

7. A composition as claimed in any one of claims 1 to 5 wherein component (ii) is a mixture of a polyisocyanate and an epoxide group containing compound.

8. A composition as claimed in any one of the preceding claims wherein component (iii) is hydroxyethyl acrylate, hydroxypropyl acrylate, hydroxybutyl acrylate, hydroxyethyl methacrylate, hydroxypropyl methacrylate or hydroxybutyl methacrylate.

9. A composition as claimed in any one of the preceding claims wherein component (iii) is present in the reaction mixture in an amount of from 5 to 40% by weight.

10. A composition as claimed in any one of the preceding claims wherein the polyurethane composition is prepared from a reaction mixture which includes therein an unsaturated co-reactant.

11. A composition as claimed in claim 10 wherein the co-reactant is an alkyl acrylate, alkyl methacrylate, polyfunctional acrylate or polyfunctional methacrylate resin.

12. A composition as claimed in any one of the preceding claims wherein the polyurethane composition is prepared from a reaction mixture which includes a catalyst therein.

13. A composition as claimed in any one of the preceding claims which additionally includes a latent isocyanate reactant therein.

14. A composition as claimed in any one of the preceding claims which after exposure to ultra violet irradiation has a tack strength of at least $3N/cm^2$.

15.A method of adhering two substrate surfaces together, which method comprises applying a polyurethane composition as claimed in any one of claims 1 to 14 to at least one of the said surfaces, subjecting the so-coated first surface to exposure

with ultra violet irradiation, contacting the first surface with the second surface to produce a fixed laminate and thereafter allowing the polyurethane composition to fully cure.

16. A laminate when bonded together with an adhesive composition as claimed in any one of claims 1 to 14, or when produced by a method and claimed in claim 15.